# EUROPEAN PATENT APPLICATION

(11) **EP 2 618 162 A1**
(43) Date of publication of application: **24.07.2013**
(21) Application number: 13151409.3
(22) Date of filing: 16.01.2013
(51) Int. Cl.: G01P 3/44

(54) **Wheel rolling bearing device with integrated speed detector**

(30) Priority: 17.01.2012 JP 2012006830
(71) Applicant: JTEKT CORPORATION, Osaka-shi Osaka 542-8502 (JP)
(72) Inventor: Yokota, Tatsuya, Osaka-shi,, Osaka 542-8502 (JP); Masuda, Yoshinori, Osaka-shi,, Osaka 542-8502 (JP)
(74) Representative: Winter, Brandl, Fürniss, Hübner, Röss, Kaiser, Polte - Partnerschaft

(57) **Abstract**

A wheel rolling bearing device includes an inner ring member 31 fitted to an axle; an outer ring member 50 having a fixing flange 57 fixed to a vehicle body-side member 12; and rolling elements rollably arranged between the inner and outer ring members. An encoder 40 and a rotation speed detector 80 are respectively arranged at radally outer peripheral portions of inner end portions of the inner and outer ring members in the vehicle lateral direction. The rotation speed detector 80 has a fixing portion 81 fixedly arranged in a spatial region between the fixing flange 57 and a radially outer periphery of the laterally inner end portion of the outer ring member, and a nose portion 83 extending obliquely from the fixing portion 81 toward the encoder 40 and having a detecting portion 84 at its distal end portion. An oblique cutout face 59a is formed in the outer ring member to avoid contact between the outer ring and the nose portion. A cutout 16 is also formed in the body-side member, and the sensor is placed in the recess defined by this cutout, without contacting th body-side member 12.

## Description

### BACKGROUND OF THE INVENTION

### 1. Field of the Invention

The invention relates to a wheel rolling bearing device.

### 2. Description of Related Art

There is a wheel rolling bearing device that is configured as an assembly unit that includes an inner ring member, an outer ring member, and rolling elements. The inner ring member is fitted to an axle. A fixing flange is formed on the outer periphery of the outer ring member. The fixing flange is fixed to a vehicle body-side member. The rolling elements are rollably arranged in an annular space between the inner ring member and the outer ring member. There is a wheel rolling bearing device of this type, in which an encoder and a rotation speed detector that are used to detect a vehicle speed are provided, the encoder is arranged on a inner ring member side, and the rotation speed detector corresponding to the encoder is fitted to a vehicle body-side member, such as a knuckle or a carrier. Also, there is an outer ring rotating-type wheel rolling bearing device that has a structure in which an encoder is fitted to an outer ring member that serves as a rotating ring and a rotation speed detector corresponding to the encoder is fitted to a vehicle body-side member (knuckle) (see, for example, Japanese Patent Application Publication No. 8-220120 (JP 8-220120 A)).

In the case of the wheel rolling bearing device having the structure in which the rotation speed detector is fitted to the vehicle body-side member such as the knuckle, when the wheel rolling bearing device that is an assembly unit including an outer ring member, an inner ring member, rolling elements, and the encoder is fitted to the vehicle body-side member, alignment between the encoder and the rotation speed detector need to be accurately performed. This work requires a lot of time and effort. For this reason, the same applicant as the present application has proposed the following technique. According to the technique, a rotation speed detector is fitted to an outer ring member of a wheel rolling bearing device, which is formed as an assembly unit, via a fitting member. The rotation speed detector is fitted to the outer ring member, at a position that is inward of an inner end portion of the outer ring member in the vehicle lateral direction such that the rotation speed detector extends in a direction perpendicular to the axial direction. Thus, an encoder and the rotation speed detector are arranged so as to be accurately positioned relative to each other within the single assembly unit (wheel rolling bearing device). However, when the rotation speed detector is arranged at a position inward of the inner end portion of the outer ring member in the vehicle lateral direction such that the rotation speed detector extends in a direction perpendicular to the axial direction, a cutout recess having a radial length corresponding to the radial length of the rotation speed detector need to be formed in the outer face of the vehicle body-side member in the vehicle lateral direction so as to extend toward a position at which the wheel rolling bearing device is fitted, in order to avoid contact between the rotation speed detector and the vehicle body-side member. As a result, the strength of the vehicle body-side member decreases.

### SUMMARY OF THE INVENTION

It is an object of the invention to provide a wheel rolling bearing device that makes it possible to fit a rotation speed detector to an outer ring member while a decrease in the strength of a vehicle body-side member is suppressed.

An aspect of the invention relates to a wheel rolling bearing device, including: an inner ring member that is fitted to an axle; an outer ring member that has a fixing flange formed on an outer periphery of the outer ring member, the fixing flange being fixed to a vehicle body-side member; and rolling elements that are rollably arranged in an annular space between the inner ring member and the outer ring member. An encoder is arranged at an outer peripheral portion of an inner end portion of the inner ring member in a vehicle lateral direction. A rotation speed detector is arranged at an outer peripheral portion of an inner end portion of the outer ring member in the vehicle lateral direction. The rotation speed detector has a fixing portion that is fixedly arranged in a spatial region between the fixing flange and an outer periphery of the inner end portion of the outer ring member in the vehicle lateral direction, and a nose portion that extends obliquely from the fixing portion toward the encoder and that has a detecting portion which detects a detection target portion of the encoder and which is formed in a distal end portion of the nose portion. An oblique cutout face is formed in the outer ring member so as to extend over the outer periphery of the inner end portion of the outer ring in the vehicle lateral direction and an inner end face of the outer ring member in the vehicle lateral direction in order to avoid contact between the outer ring member and the nose portion.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a longitudinal sectional view that shows a state where a wheel rolling bearing device according to an embodiment of the invention is fitted to a vehicle body-side member and an axle;
FIG. 2 is an enlarged longitudinal sectional view that shows a state where an encoder is fitted to an inner ring member and a rotation speed detector is fitted to an outer ring member; and
FIG. 3 is a perspective view of a relationship between a set of the encoder and an encoder fitting member and a set of the rotation speed detector and a detector fitting member.

### DETAILED DESCRIPTION OF EMBODIMENTS

Hereinafter, an embodiment of the invention will be described.

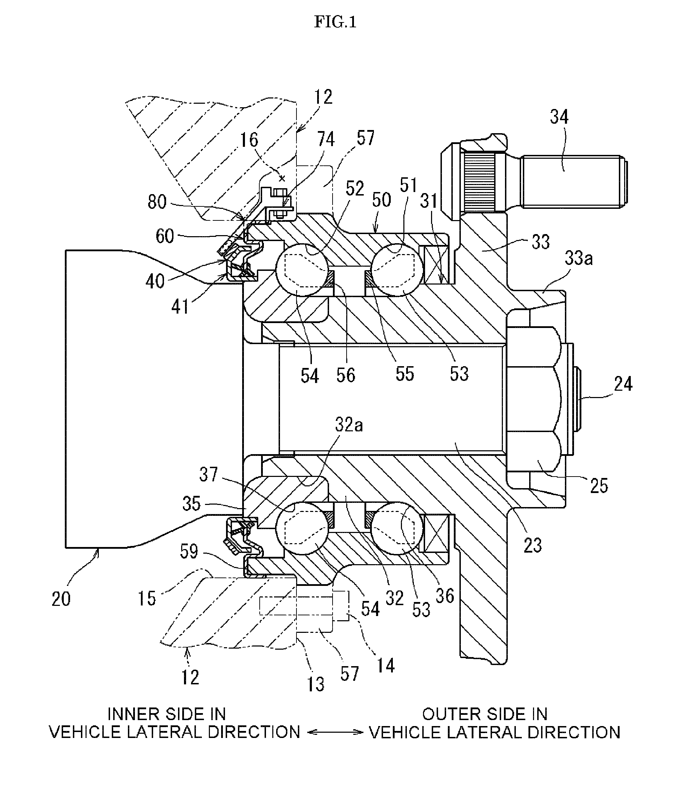

The embodiment of the invention will be described with reference to the accompanying drawings. As shown in FIG. 1, a wheel rolling bearing device according to the embodiment is formed as an assembly unit that includes an outer ring member 50, an inner ring member 31, rolling elements 53, 54, an encoder 40, and a rotation speed detector 80.

The inner ring member 31 is a single-piece member that has a shaft portion 32, a flange portion 33 and a fitting portion 33a. The shaft portion 32 has a cylindrical shape. The flange portion 33 is formed on the outer periphery of an outer end portion of the shaft portion 32 in the vehicle lateral direction. The fitting portion 33a protrudes outward from the center portion of an outer face of the flange portion 33 in the vehicle lateral direction. Multiple hub bolts 34 are fixedly press-fitted to the flange portion 33 of the inner ring member 31 at a predetermined pitch. The hub bolts 34 are used to fit a wheel (not shown) to the flange portion 33 with a brake rotor (not shown) interposed between the flange portion 33 and the wheel. The brake rotor and the wheel are fitted around the outer periphery of the fitting portion 33a, that is, the fitting portion 33a is fitted in the center holes of the brake rotor and the wheel.

An inner ring raceway surface 36 that is on the outer side in the vehicle lateral direction is formed on the outer periphery of a portion of the shaft portion 32 of the inner ring member 31, which is close to the flange portion 33. A small-diameter shaft portion 32a is formed at an inner portion of the shaft portion 32 of the inner ring member 31 in the vehicle lateral direction. An inner ring element 35 is fixedly press-fitted to the small-diameter shaft portion 32a. An inner ring raceway surface 37 that is on the inner side of the inner ring raceway surface 36 in the vehicle lateral direction is formed on the outer periphery of the inner ring element 35. A spline shaft portion 23 that protrudes from the end face of an axle 20 outward in the vehicle lateral direction is spline-fitted to the center hole of the shaft portion 32 of the inner ring member 31. A fastening nut 25 is fastened to an external threaded portion 24 at the distal end of the spline shaft portion 23. Thus, the inner ring member 31 and the axle 20 are coupled to each other such that torque is transmittable therebetween.

As shown in FIG. 1, the outer ring member 50 is formed in a cylindrical shape, and is coaxially arranged radially outward of the outer periphery of the shaft portion 32 of the inner ring member 31 with an annular space left between the outer ring member 50 and the inner ring member 31. An outer ring raceway surface 51 and an outer ring raceway surface 52 that is on the inner side of the outer ring raceway surface 51 in the vehicle lateral direction are formed on the inner periphery of the outer ring member 50 at respective axial positions that correspond to the ring raceway surface 36 and the inner ring raceway surface 37. A plurality of rolling elements 53 is rollably arranged between the inner ring raceway surface 36 and the outer ring raceway surface 51, and retained by a cage 55. A plurality of rolling elements 54 is rollably arranged between the inner ring raceway surface 37 and the outer ring raceway surface 52, and retained by a cage 56. Thus, a double row rolling bearing (angular contact ball bearing in FIG. 1) is formed.

A knuckle and a fixing flange 57 are formed on the outer periphery of the outer ring member 50. The knuckle is supported by a suspension (not shown) of a vehicle. The fixing flange 57 is fastened to a fitting face 13 of a vehicle body-side member 12, such as a carrier, with bolts 14. The outer ring member 50 is fixed to the vehicle body-side member 12 as follows. The outer periphery of the inner end portion of the outer ring member 50 in the vehicle lateral direction is fitted into a fitting hole 15 of the vehicle body-side member 12, and the bolts 14 are screwed into the fitting face 13 of the vehicle body-side member 12 through the fixing flange 57 with the fixing flange 57 in contact with the fitting face 13 of the vehicle body-side member 12.

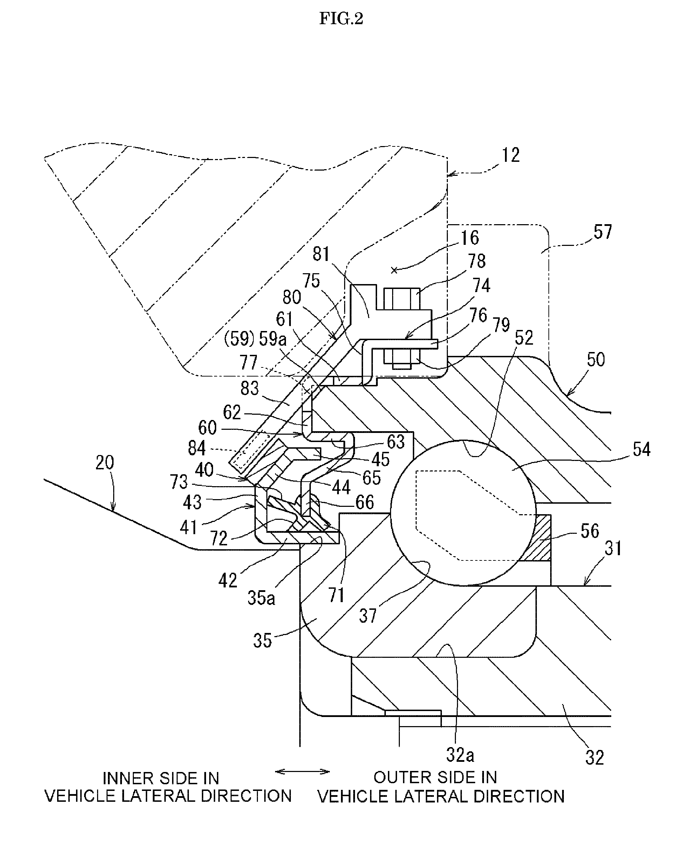

As shown in FIG. 2, the encoder 40 is arranged on the outer periphery of the inner end portion of the inner ring member 31 in the vehicle lateral direction (in the first embodiment, the outer periphery of a small-diameter portion 35a formed as a step at the inner end portion of a raceway shoulder portion of the inner ring element 35 in the vehicle lateral direction) via an encoder fitting member 41. The encoder fitting member 41 also functions as a slinger. The encoder fitting member 41 has a fitting cylindrical portion 42, an annular portion 43, a tapered cylindrical portion 44 and a radially outer cylindrical portion 45. The radially outer cylindrical portion 45 is formed into a cylindrical shape and extends from the distal end of the tapered cylindrical portion 44 outward in the vehicle lateral direction. The fitting cylindrical portion 42 is fixedly press-fitted to the outer periphery of the small-diameter portion 35a of the raceway shoulder portion of the inner ring element 35. The annular portion 43 extends outward in the radial direction, at a right angle with respect to the inner end portion of the fitting cylindrical portion 42 in the vehicle lateral direction. The tapered cylindrical portion 44 is gradually increased in diameter from the radially outer end of the annular portion 43 outward in the vehicle lateral direction. The radially outer cylindrical portion 45 is formed into a cylindrical shape and extends from the distal end portion of the tapered cylindrical portion 44 outward in the vehicle lateral direction.

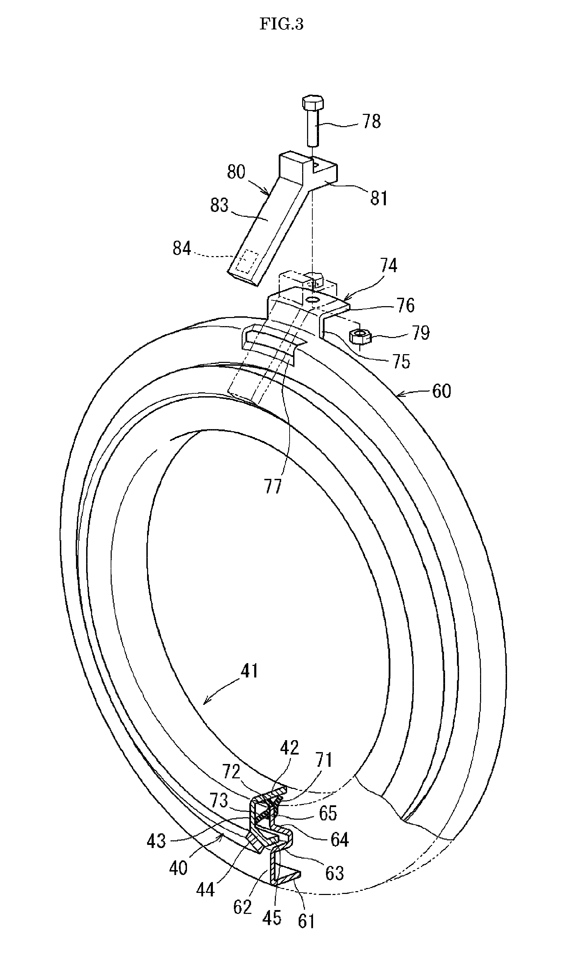

As shown in FIG. 2 and FIG. 3, the encoder 40 is arranged on the surface of the tapered cylindrical portion 44 of the encoder fitting member 41. In the present embodiment, a pulser ring, a magnetic encoder, or the like, which is magnetized such that the magnetic characteristics (the south pole and the north pole) are alternately changed in the circumferential direction is used as the encoder 40, and the encoder 40 is stuck to the surface of the tapered cylindrical portion 44 with an adhesive agent, or the like.

As shown in FIG. 2 and FIG. 3, the rotation speed detector 80 that corresponds to the encoder 40 is fixedly arranged in a spatial region between the outer periphery of the inner end portion of the outer ring member 50 in the vehicle lateral direction and the fixing flange 57 via a detector fitting member 60. In the present embodiment, the detector fitting member 60 is formed by subjecting a steel plate to a press work. The detector fitting member 60 is a single-piece member that has a fixing portion 61, an annular portion 62, a radially inward cylindrical portion 63, a tapered cylindrical portion 65, a radially inward annular portion 66, radial lips 71, 72, an axial lip 73, and a fitting portion 74.

As shown in FIG. 2 and FIG. 3, in the detector fitting member 60, the fixing portion 61 is formed in a cylindrical shape and is fixedly press-fitted to the outer periphery of the inner end portion of the outer ring member 50 in the vehicle lateral direction. The annular portion 62 is formed in an annular shape, extends radially inward from the inner end edge of the fixing portion 61 in the vehicle lateral direction, and contacts the inner end face of the outer ring member 50 in the vehicle lateral direction. In this way, positioning of the detector fitting member 60 is performed. The radially inward cylindrical portion 63 is formed into a cylindrical shape, extends from the radially inner end of the annular portion 62, and fitted to the inner periphery of the inner end portion of the outer ring member 50 in the vehicle lateral direction. Preferably, a portion of the inner end portion of the outer ring member 50 in the vehicle lateral direction, to which the fixing portion 61 is press-fitted, is formed to have a diameter smaller than the other portion of the inner end portion of the outer ring member 50 by an amount corresponding to the thickness of the fixing portion 61. That is, in a state where the fixing portion 61 is press-fitted to the small-diameter portion of the inner end portion of the outer ring member 50 in the vehicle lateral direction, the outer periphery of the fixing portion 61 and the outer periphery of the inner cylindrical portion of the outer ring member 50 in the vehicle lateral direction are flush with each other. In this way, it is possible to stably insert the inner cylindrical portion of the outer ring member 50 in the vehicle lateral direction into the fitting hole 15 of the vehicle body-side member 12 and fit the outer ring member 50 to the vehicle body-side member 12.

As shown in FIG. 2 and FIG. 3, the tapered cylindrical portion 65 and the radially inward annular portion 66 of the detector fitting member 60 are formed into a Z-shape in longitudinal section, and extend radially inward from the inner end portion of the radially inward cylindrical portion 63 in the vehicle lateral direction. The radial lips 71, 72 and the axial lip 73 having rubber elasticity are fixedly stuck to the radially inner end portion of the annular portion 66 by cure adhesion, or the like. The radial lips 71, 72 and the axial lip 73 are in sliding contact with the inner periphery of the fitting cylindrical portion 42 of the encoder fitting member 41 and the outer face of the annular portion 43 in the vehicle lateral direction. That is, in the first embodiment, the radially inward cylindrical portion 63, the tapered cylindrical portion 65, the radially inward annular portion 66, the radial lips 71, 72 and the axial lip 73 of the detector fitting member 60 each function as a seal member.

As shown in FIG. 2 and FIG. 3, the fitting portion 74 of the detector fitting member 60 has a leg portion 75 and a fastening portion 76. The leg portion 75 extends radially outward at a right angle with respect to a portion (upper portion in FIG. 3) of the outer end portion of the fixing portion 61 in the vehicle lateral direction. The fastening portion 76 extends in a horizontal direction from the distal end of the leg portion 75 toward the inner face of the fixing flange 57 in the vehicle lateral direction.

The rotation speed detector 80 has a fixing portion 81 and a nose portion 83 in the spatial region between the outer periphery of the inner end portion of the outer ring member 50 in the vehicle lateral direction and the fixing flange 57. The fixing portion 81 is fixed to the upper face of the fastening portion 76 of the detector fitting portion 60 with a bolt 78 and a nut 79. The nose portion 83 extends obliquely from the fixing portion 81 toward the encoder 40, and has a detecting portion 84 at its distal end portion. The detecting portion 84 is able to detect a detection target portion (magnetized face) of the encoder 40.

As shown in FIG. 2 and FIG. 3, a cutout hole 77 is formed in the detector fitting member 60 so as to extend over the fixing portion 61 and the annular portion 62. The cutout hole 77 is formed to avoid contact between the detector fitting member 60 and the nose portion 83 of the rotation speed detector 80. In addition, an oblique cutout face 59a is formed in the outer ring member 50 so as to extend over the outer periphery of the inner end portion in the vehicle lateral direction and the inner end face in the vehicle lateral direction in order to avoid contact between the outer ring member 50 and the nose portion 83.
In the present embodiment, a chamfered portion 59 is formed in the outer ring member 50 by chamfering a portion of the outer ring member 50 within a range over the outer periphery of the inner end portion in the vehicle lateral direction and the inner end face in the vehicle lateral direction. A portion (upper portion) of the chamfered portion 59 forms the oblique cutout face 59a for avoiding contact between the outer ring member 50 and the nose portion 83.

The wheel rolling bearing device according to the present embodiment is configured as described above. Therefore, in the spatial region between the outer periphery of the inner end portion of the outer ring member 50 in the vehicle lateral direction and the fixing flange 57, the fixing portion 81 of the rotation speed detector 80 is fixedly fastened to the upper face of the fastening portion 76 of the fitting portion 74 of the detector fitting member 60 with the bolt 78 and the nut 79. In addition, the nose portion 83 that extends from the fixing portion 81 of the rotation speed detector 80 is arranged along the oblique cutout face 59a of the inner end portion of the outer ring member 50 in the vehicle lateral direction, via the cutout hole 77 formed so as to extend over the fixing portion 61 and the annular portion 62 of the detector fitting member 60. Thus, the cutout face 59a functions as a positioning face. In this way, the detecting portion 84 of the distal end portion of the nose portion 83 is positioned and arranged at a position (position at which the detecting portion 84 is able to detect the detection target portion) at which the detecting portion 84 faces the detection target portion (magnetized face) of the encoder 40 in proximity to the detection target portion.

As described above, provision of the rotation speed detector 80 makes it possible to reduce a distance from the outer periphery of the outer ring member 50 to the fixing portion 81 of the rotation speed detector 80 and a distance from the inner face of the fixing flange 57 of the outer ring member 50 in the vehicle lateral direction to the fixing portion 81 of the rotation speed detector 80, in comparison with a case where a rotation speed detector is fitted to an outer ring member, at a position inward of the inner end portion of the outer ring member in the vehicle lateral direction such that the rotation speed detector extends in a direction perpendicular to the axial direction. As a result, it is possible to make the cutout recess 16, which is formed in the vehicle body-side member 12 to avoid contact between vehicle body-side member 12 and the rotation speed detector 80, small in the radial direction and the axial direction. As a result, it is possible to suppress a decrease in the strength of the vehicle body-side member 12.

In the present embodiment, a portion (upper portion) of the chamfered portion 59, which is formed by chamfering a portion of the outer ring member 50 within a region over the outer periphery of the inner end portion of the outer ring member 50 in the vehicle lateral direction and the inner end face of the outer ring member 50 in the vehicle lateral direction, forms the oblique cutout face 59a for avoiding contact between the outer ring member 50 and the nose portion 83. Therefore, it is possible to save time and effort for forming an exclusive cutout face in the outer periphery of the inner end portion of the outer ring member 50 in the vehicle lateral direction.

In the present embodiment, the radially inward cylindrical portion 63, the tapered cylindrical portion 65, the radially inward annular portion 66, the radial lips 71, 72 and the axial lip 73 of the detector fitting member 60 constitute the seal members. Therefore, it is possible to save time and effort for forming a seal member separately from the detector fitting member 60 and fit the seal member to the detector fitting member 60.

The invention is not limited to the above embodiment, and the invention may be implemented in various other embodiments without departing from the scope of the invention. For example, in the above-described embodiment, the rotation speed detector is fixedly arranged via the detector fitting member 60 in the spatial region between the outer periphery of the inner end portion of the outer ring member 50 in the vehicle lateral direction and the fixing flange 57. Alternatively, a seat portion may be formed on the outer periphery of the inner end portion of the outer ring member 50 in the vehicle lateral direction and the fixing portion 81 of the rotation speed detector 80 may be fixed to the seat portion with a bolt, or the like.

## Claims

1. A wheel rolling bearing device, comprising:
an inner ring member that is fitted to an axle;
an outer ring member that has a fixing flange formed on an outer periphery of the outer ring member, the fixing flange being fixed to a vehicle body-side member; and
rolling elements that are rollably arranged in an annular space between the inner ring member and the outer ring member, wherein
an encoder is arranged at an outer peripheral portion of an inner end portion of the inner ring member in a vehicle lateral direction,
a rotation speed detector is arranged at an outer peripheral portion of an inner end portion of the outer ring member in the vehicle lateral direction,
the rotation speed detector has a fixing portion that is fixedly arranged in a spatial region between the fixing flange and an outer periphery of the inner end portion of the outer ring member in the vehicle lateral direction, and a nose portion that extends obliquely from the fixing portion toward the encoder and that has a detecting portion that detects a detection target portion of the encoder and that is formed in a distal end portion of the nose portion, and
an oblique cutout face is formed in the outer ring member so as to extend over the outer periphery of the inner end portion of the outer ring in the vehicle lateral direction and an inner end face of the outer ring member in the vehicle lateral direction.

2. The wheel rolling bearing device according to claim 1, wherein
the oblique cutout face of the outer ring member is formed of a portion of a chamfered portion formed, through a chamfering process, in the outer periphery of the inner end portion of the outer ring member in the vehicle lateral direction.
